# FASCICULE DE BREVET EUROPEEN

(11) **EP 2 855 061 B1**
(45) Date de publication et mention de la délivrance du brevet: **25.05.2016**
(21) Numéro de dépôt: 13731384.7
(22) Date de dépôt: 31.05.2013
(51) Int. Cl.: B23C 3/05, B24B 15/02, B24B 9/00, B24D 7/18, B24D 13/14

(54) **DISPOSITIF ET PROCÉDÉ D'USINAGE DE PORTÉE DE SIÈGE D'UNE PIÈCE MÉCANIQUE.**
VORRICHTUNG UND VERFAHREN ZUR BEARBEITUNG EINER SITZFLÄCHE EINES MECHANISCHEN TEILS
DEVICE AND METHOD FOR MACHINING A SEAT FACE OF A MECHANICAL PART

(30) Priorité: 01.06.2012 FR 1201587
(43) Date de publication de la demande: 08.04.2015
(73) Titulaire: Mecachrome France, 37403 Amboise Cedex (FR)
(72) Inventeur: DUVAL, Laurent, 53170 Meslay du Maine (FR)
(74) Mandataire: Benech, Frédéric
(86) Numéro de dépôt international: PCT/FR2013/051230
(87) Numéro de publication internationale: WO 2013/178960

(56) Documents cités:
- FR-A1- 2 356 478
- FR-A1- 2 946 907

## Description

La présente invention concerne un dispositif d'usinage de pièces mécaniques, comprenant un porte outil mobile en rotation autour d'un axe muni d'au moins une lame de coupe périphérique.

Elle concerne également un procédé d'utilisation d'un tel dispositif.

Elle trouve une application particulièrement importante bien que non exclusive dans le domaine de la construction automobile ou aéronautique et notamment de l'usinage de pièces mécaniques cylindriques, en particulier de l'usinage des portées de siège de soupapes de moteur à combustion.

Lors d'une opération d'usinage d'un siège de soupape, et afin d'obtenir une forme géométrique satisfaisante, il est connu d'utiliser successivement un outil de coupe puis, s'il y a lieu, un outil de finition et/ou rectification.

Mais l'utilisation successive d'outils différents est une opération non seulement complexe à mettre en oeuvre et à automatiser (permutation des outils, repositionnement précis,...) mais également coûteuse en temps de cycle, au détriment de la productivité.

Pour pallier à ces inconvénients, il a été proposé des dispositifs permettant d'usiner et de finir simultanément des zones différentes d'une pièce par des outils montés sur un même axe mais d'orientation ou de position longitudinale le long de l'axe différents.

De tels dispositifs ne permettent pas d'usiner et de rectifier en même temps la même zone d'une pièce.

Ils ne sont donc pas adaptés pour les sièges de soupapes qui demandent un travail de précision et ils ne règlent pas les problèmes de temps de cycle important.

En outre, et particulièrement dans un environnement assujetti à de fortes vibrations, ils n'assurent pas une conformité optimale axiale de la pièce usinée, que ce soit longitudinalement et/ou radialement.

On connaît également (FR 2 946 907) un dispositif qui permet l'usinage pour la découpe et l'usinage par abrasion, mais pas de la même zone.

La présente invention vise à fournir un dispositif et un procédé d'usinage de portée de siège d'une pièce mécanique répondant mieux que ceux antérieurement connus aux exigences de la pratique, notamment en ce qu'elle va permettre d'une part l'usinage avec un outil de coupe et d'autre part avec un outil par abrasion d'une même zone d'une même pièce et ce simultanément ou sensiblement simultanément avec une conformité géométrique accrue, une meilleure reproductibilité et un taux de rebus proche de zéro. Un taux de fuite maîtrisé et réduit par rapport à ceux de l'art antérieur est par ailleurs obtenu, dans le cas de siège de soupapes.

Pour ce faire l'invention va à l'encontre des habitudes de l'homme du métier en faisant travailler des outils différents sur le même axe de rotation et ce simultanément, en acceptant notamment que l'un des deux ne travaille pas dans ses conditions optimales (vitesse de rotation, vitesse d'avancement, rigidité, pression contre la pièce, ...).

Dans ce but, l'invention propose essentiellement un dispositif d'usinage de portée de siège d'une pièce mécanique, comprenant un porte outil mobile en rotation autour d'un axe muni d'au moins une lame de coupe périphérique, caractérisé en ce que il comporte de plus un outil d'usinage par abrasion solidaire en rotation du porte outil, présentant au moins une surface abrasive, ledit outil d'usinage étant monté sur le porte outil et rendu solidaire dudit porte outil par le biais de moyens élastiques autorisant son mouvement axial relatif par rapport audit porte outil.

Dans un premier mode de réalisation avantageux l'outil d'usinage et le porte outil sont agencés pour que le mouvement axial se forme entre une première position où la lame de coupe est dans une position d'effacement par rapport à la surface abrasive et une deuxième position où la lame de coupe est tangente et/ou en saillie par rapport à ladite surface abrasive.

Une telle disposition autorise le mouvement axial relatif par rapport au porte outil entre une position initiale d'engagement de la surface abrasive avec la pièce, une position intermédiaire d'attaque par la lame de coupe et une position finale de mise en compression de la surface abrasive avec la portée du siège.

La mise en compression s'effectue par l'application d'une force sur le porte outil et donc sur les moyens élastiques qui varient par exemple entre 200N et 1.200N.

Dans ce mode de réalisation les moyens élastiques sont agencés pour être relâchés dans la première position d'effacement de la lame de coupe et/ou d'engagement initial de la surface abrasive. Au fur et à mesure de la mise en compression, la lame de coupe peut venir en contact et attaquer le siège, tout en maintenant l'abrasion.

Dans un autre mode de réalisation avantageux l'outil d'usinage et le porte outil sont agencés pour que le mouvement axial se fasse entre une première position où la lame de coupe est en saillie par rapport à la surface abrasive, et une deuxième position où la surface abrasive est tangente et/ou dépasse la lame de coupe.

Dans ce mode de réalisation les moyens élastiques sont agencés pour être relâchés dans la première position en saillie d'attaque de la lame.

Au fur et à mesure de la mise en compression, la surface abrasive peut venir en contact et réaliser l'usinage.

Avec l'invention et grâce notamment à ses moyens élastiques autorisant son mouvement axial relatif par rapport à l'outil, celui-ci assure une très grande conformité aux pièces produites.

Dans des modes de réalisation avantageux, on a de plus recours à l'une et/ou à l'autre des dispositions suivantes :
- la surface abrasive est tronconique ;
- les moyens élastiques comprennent au moins un ressort hélicoïdal ;
- les moyens élastiques sont formés au moins en partie de matière compressible.

Par matière compressible, on entend toutes matières élastiques telles que du caoutchouc, un ou plusieurs polymères élastiques à température ambiante etc... ;
- le porte outil comporte au moins un évidement de dégagement des copeaux situé au niveau de la lame de coupe ;
- la lame est amovible et comporte des moyens de fixation sur le porte outil par vis dont la tête est accessible par l'évidement ;
- le porte outil est muni d'une portion présentant une surface de butée de la surface abrasive de l'outil d'usinage par abrasion ;
- la portion de butée est partiellement tronconique ;
- l'outil d'usinage par abrasion est fixé de façon amovible sur le porte outil.

L'invention concerne également un procédé d'usinage de portée de siège d'une pièce mécanique, par un dispositif comprenant un porte outil mobile en rotation autour d'un axe muni d'au moins une lame de coupe périphérique, caractérisé en ce que on effectue la coupe de la portée de siège par rotation du porte outil et de la lame de coupe et simultanément ou sensiblement simultanément, on effectue l'usinage par abrasion du siège par un outil d'usinage solidaire en rotation du porte outil, présentant une surface abrasive monté de façon élastique dans le sens axial par rapport au porte outil en apportant progressivement le porte outil de la pièce pour mettre en contact et/ou en pression la lame et l'outil d'usinage sur ladite pièce.

Par sensiblement simultanément, on entend sur une période de temps inférieure à 2s, avantageusement inférieure à 1s, par exemple quelques dixièmes ou centièmes de secondes par exemple 0,1s.

Avantageusement on comprime l'outil d'usinage par rapport au porte outil entre une première position initiale d'engagement de la surface abrasive avec la portée du siège, une deuxième position intermédiaire d'attaque de la lame de coupe et une troisième position finale de mise en compression de la surface abrasive avec la portée du siège à une pression déterminée.

La pression déterminée va dépendre de l'usinage recherché et sera adaptée par l'homme du métier au vu des caractéristiques voulues, de façon connue.

Egalement avantageusement, après avoir comprimé l'outil d'usinage par rapport au porte outil dans la position finale, on relâche la compression de l'outil d'usinage jusqu'à une quatrième position d'abrasage seul, éloignant à nouveau la lame de sa position d'attaque (les positions initiale, intermédiaire et finale constituant des première, deuxième et troisième positions de l'outil d'usinage).

Egalement avantageusement on effectue la rectification ou usinage par abrasion à la même vitesse que la coupe.

Dans un autre mode de réalisation avantageux on comprime l'outil d'usinage par rapport au porte outil entre une première position d'attaque de la lame de coupe avec la partie du siège et une deuxième position de mise en compression de la surface abrasive sur le siège.

Avantageusement une troisième position maximale est encore réalisée par pression supplémentaire (jusqu'à une seconde valeur déterminée).

L'invention sera mieux comprise à la lecture de la description qui suit de modes particuliers de réalisation donnes ci-après à titre d'exemples non limitatifs. La description se réfère aux dessins qui l'accompagnent dans lesquels :
La figure 1 montre en vue latérale, un mode de réalisation d'un dispositif selon l'invention, en coupe partiellement éclatée.
La figure 2 est une vue en perspective du dispositif de la figure 1.
La figure 3 illustre schématiquement l'accostage du dispositif de la figure 1 sur un siège de soupape.

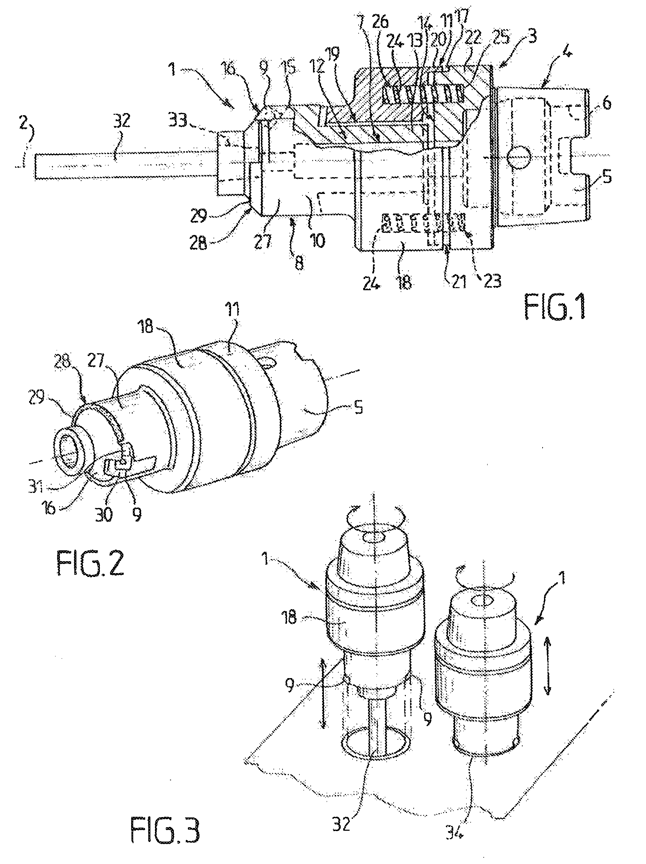

La figure 1 montre un dispositif 1 d'usinage de forme globalement allongée autour d'un axe 2, d'une pièce mécanique (non représentée).

Le dispositif comporte un porte outil 3 mobile en rotation autour de l'axe 2.

Le porte outil 3 comprend dans sa partie proximale une bride 4 de connexion à un moteur rotatif (non représenté) pour sa mise en rotation autour dudit axe 2.

La bride 4 est par exemple formée de façon connue en elle-même, par une broche 5 présentant une surface externe cônique, par exemple formant un cône morse, comprenant un évidement femelle intérieur 6, destiné à un brochage mâle (non représenté) solidaire en rotation du moteur.

La broche 5 est solidaire et/ou formée d'un seul bloc avec le corps 7 du porte outil. Celui-ci étant muni du côté de son extrémité distale 8, d'au moins une lame de coupe 9, par exemple trois lames de coupe disposées radialement de façon répartie.

Chaque lame 9 est formée de façon connue en elle-même par une plaquette par exemple rectangulaire ou carrée, métallique aiguisée, démontable, par exemple carrée de 1 cm de côté.

La plaquette peut bien entendu être de forme différente, par exemple ronde ou de forme complexe (profil à plusieurs pentes courbes par exemple) en fonction de la coupe recherchée.

Le dispositif 1 comporte un outil de rectification 10, monté solidairement en rotation avec le corps 7 du porte outil.

Le corps 7 comprend un tambour plein 11 d'un premier diamètre externe, intermédiaire, connecté d'un côté à la bride 4 et de l'autre côté à une partie allongée 12 comprenant une portion cylindrique 13 de diamètre plus petit que ledit premier diamètre intermédiaire, de sorte qu'une surface 17 annulaire de largeur correspondante à la différence de diamètre soit dégagée.

La portion cylindrique 13 comprend dans sa partie distale 15 une portion d'extrémité 16 partiellement tronconique, agencée pour coopérer avec un outil de rectification 10.

Celui-ci comprend une première partie proximale 18 cylindrique comprenant un alésage central 19, formant un fourreau coulissant avec jeu sur la portion cylindrique 13 du porte outil 3 entre la surface distale 14 du tambour 11 du porte outil et sa portion d'extrémité 16 partiellement tronconique.

La partie proximale 18 comprend une extrémité formant une lèvre annulaire 20 coopérant à glissement avec la face externe 21 de la périphérie 22 du tambour 11 située du côté de l'avant de l'outil et formant par exemple un évidement annulaire de forme complémentaire.

L'outil de rectification 10 est rendu solidaire en rotation du porte outil 3 grâce à des moyens élastiques 23 autorisant néanmoins son mouvement axial relatif par rapport au porte outil 3.

Plus précisément, les moyens élastiques 23, dans le mode de réalisation plus particulièrement décrit ici, sont formés par des ressorts hélicoïdaux 24, régulièrement répartis par exemple au nombre de deux, trois ou quatre.

Les ressorts 24 sont montés dans des évidements cylindriques 25 et 26 respectivement ménagés dans les parties en vis à vis du tambour 11 et de la partie proximale 18.

Cela est rendu possible par le fait que le diamètre de la portion cylindrique est plus petit que le premier diamètre intermédiaire.

L'outil de rectification 10 peut être de toute nature mais sera dans la suite de la description associé à une surface d'abrasion.

Il est par exemple formé d'une seule pièce et se compose donc de deux parties cylindriques de même axe et de diamètre différent, la partie proximale 18 et une partie distale 27 qui est la partie active.

La partie proximale 18, de même diamètre externe que le tambour 11, s'appuie élastiquement par l'intermédiaire des ressorts 24 sur la surface 14 distale du tambour 11 du corps 7 porte outil et présente un alésage 19 qui peut coulisser autour de la portion cylindrique 13 de la partie allongée permettant ainsi le mouvement axial relatif par rapport au corps porte outil entre des première, deuxième et troisième positions comme cela sera décrit ci-après.

L'extrémité distale 28 de l'outil de rectification 10 forme une section tronconique présentant une surface abrasive 29 éventuellement montée de façon amovible.

La portion d'extrémité 16 partiellement tronconique du porte outil 3 présente quant à elle, une surface située dans le prolongement de la surface tronconique abrasive 29 de l'outil de rectification 10.

L'extrémité distale 28 comporte de plus des évidements 30, longitudinaux rectangulaires, se prolongeant vers la seconde section cylindrique propre à laisser passer les lames 9 dont le côté tranchant peut alors agir.

Les évidements 30 permettent également l'évacuation des copeaux et l'accès aux lames 9 pour démontage. (Les lames 9 sont par exemple fixées sur le porte outil 3 de façon connue en elle-même par des vis).

Lorsque les ressorts 24 sont relâchés, la surface abrasive tronconique 29 est en amont des lames 9, c'est-à-dire en excroissance par rapport aux lames 9.

La différence des positions longitudinales entre la surface abrasive 29 et les lames 9 représente dans ce cas-là un écart compris entre 0,2 mm et 1 mm, par exemple 0,5 mm.

Les évidements 30 comprennent également une tranchée radiale 31 située au niveau de la lame 9 de coupe, favorisant encore le dégagement des copeaux, en formant une poche à copeaux.

On va maintenant décrire, notamment en référence à la figure 3, un exemple de fonctionnement du mode de réalisation du dispositif 1.

Le porte outil 3 est broché sur un moteur (non représenté), par exemple électrique et à commande numérique et est fixé de l'autre côté à une tige 32, de centrage et/ou à un outil de perçage et/ou alésage par exemple, de façon connue en elle-même, par le biais d'un alésage 33 usiné en cône morse par exemple.

La commande permet d'automatiser et de maitriser les conditions d'utilisation de l'outil notamment la vitesse de rotation, qui est la même pour l'outil de coupe et l'outil de rectification 10, ainsi que la pression exercée par le dispositif sur le siège d'une soupape.

La vitesse de rotation est comprise entre 300 tour.min⁻¹ et 1200 tour.min⁻¹ par exemple 600 tour.min⁻¹.

L'ensemble du dispositif 1 est mobile en translation. Une fois le moteur mis en rotation l'ensemble est placé au-dessus du siège 34, par exemple de soupape, à usiner.

Une éventuelle première étape fait pénétrer la tige 32 dans le guide de soupape par le côté siège 34 pour former un guide pour l'ensemble.

Le porte outil 3 est ainsi descendu jusqu'à une première position de mise en contact et d'engagement de la surface abrasive 29 tronconique de l'outil de rectification 10 avec le siège 34, la portion d'extrémité 16 formant alors surface de butée de la surface abrasive 29.

La première position correspond à celle où les moyens élastiques 23 sont encore dans leur état d'équilibre et/ou dans lequel la surface annulaire 14 est le plus éloignée de la surface en regard de la partie proximale 18 correspondante.

Les moyens élastiques 23 autorisent à l'ensemble de continuer la descente jusqu'à une seconde position dégageant les lames de coupe 9.

Cette position est comprise dans une zone correspondant à une compression de 5% à 90% de la longueur des moyens élastiques 23, par exemple 50%.

Le siège 34 commence alors d'abord par être abrasé légèrement puis est découpé.

La descente se poursuit jusqu'à une troisième position de mise en compression de la surface abrasive 29, permettant la rectification de la portée du siège pendant un temps déterminé.

Cette troisième position est comprise dans une zone correspondant à une compression supérieure des moyens élastiques 23 par rapport à la seconde position et allant jusqu'à la compression maximale des moyens élastiques 23.

La disposition des lames 9 et de la surface tronconique abrasive 29 de l'outil de rectification 10 agissent alors sur la même zone de la pièce à usiner et travaillent de manière simultanée ou quasi simultanée.

La commande numérique asservit le moteur pour exercer la pression sur les moyens élastiques 23, et donc la finition désirée.

La valeur déterminée des pressions appliquées est le résultat d'une force de compression comprise entre 200 N et 1200 N par exemple 700 N, par exemple une valeur comprise entre 1 MPa et 8 MPa.

Il est également possible avec l'invention d'effectuer une étape supplémentaire, par exemple de superfinition, qui amène l'outil dans une quatrième position d'abrasage seul.

Cette quatrième position est obtenue, une fois l'outil dans sa troisième position de coupe et d'abrasion, en réduisant la pression exercée sur l'outil 10 jusqu'à ce que les lames 9 de coupe soient éloignées de leur position d'attaque, c'est-à-dire ne soient plus en contact avec la pièce à usiner.

La pression exercée sur l'outil 10 est alors strictement inférieure à la pression nécessaire pour atteindre la deuxième position.

De cette manière l'invention permet un gain de temps de cycle supplémentaire en effectuant une opération de finition et/ou superfinition lors de son retour à sa position initiale.

L'ensemble est alors dégagé pour usiner un nouveau guide et/ou son siège et les moyens élastiques 23 ramènent alors l'outil de rectification 10 dans sa position initiale.

Dans un autre mode de réalisation de l'invention, lorsque les ressorts 24 sont relâchés, la surface abrasive tronconique 29 est en aval des lames 9, c'est-à-dire que les lames 9 sont en excroissance par rapport à elle.

Les moyens élastiques 23 autorisent alors le déplacement de l'outil d'abrasion 10, d'une première position dans laquelle les lames 9 attaquent la pièce à usiner puis, par pression supplémentaire, dans une seconde position d'engagement de la surface abrasive 29 avec la pièce, et enfin jusqu'à une troisième position d'abrasion maximale, toujours par pression supplémentaire.

Bien que l'invention soit adaptée pour l'usinage de tous les types de surfaces, le mode de réalisation particulièrement décrit permet notamment l'usinage de surfaces initialement planes telles que les surfaces de guide cylindrique dont le siège, par exemple, n'est pas préformé.

Comme il va de soi et comme il en résulte d'ailleurs de ce qui précède, la présente invention n'est pas limitée aux modes de réalisation plus particulièrement décrits. Elle en embrasse au contraire toutes les variantes et notamment celles où il est prévu plusieurs lames 9 de coupe, par exemple deux lames symétriques par rapport à l'axe 2, trois ou quatre lames 9 réparties angulairement, celles où les lames 9 ont des profils complexes tels qu'arrondis, en pente et/ou courbes ou celles où l'outil d'usinage 10 rectification est un outil de finition et/ou n'est pas d'une seule pièce ainsi que celles où la portion de butée et/ou la surface abrasive 29 serait d'une formé autre que tronconique tel que par exemple plane ou de profil courbe.

## Revendications

1. Dispositif (1) d'usinage de portée de siège (34) d'une pièce mécanique, comprenant un porte outil (3) mobile en rotation autour d'un axe (2) muni d'au moins une lame (9) de coupe périphérique, **caractérisé en ce qu'**il comporte de plus un outil d'usinage (10) par abrasion solidaire en rotation du porte outil (3), présentant au moins une surface abrasive (29), ledit outil d'usinage étant monté sur le porte outil (3) et rendu solidaire par le biais de moyens élastiques (23) autorisant son mouvement axial relatif par rapport au porte outil (3).

2. Dispositif selon la revendication 1, **caractérisé en ce que** l'outil d'usinage (10) et le porte outil (3) sont agencés pour que le mouvement axial se fasse entre une première position où la lame (9) de coupe est dans une position d'effacement par rapport à la surface abrasive (29) et une deuxième position où la lame (9) de coupe est tangente et/ou en saillie par rapport à ladite surface abrasive (29).

3. Dispositif selon l'une des revendications 1 et 2, **caractérisé en ce que** l'outil d'usinage (10) et le porte outil sont agencés pour que le mouvement axial se fasse entre une position initiale d'engagement de la surface abrasive (29) avec la pièce, une position intermédiaire d'attaque par la lame (9) de coupe et une position finale de mise en compression de la surface abrasive (29) avec la portée du siège (34).

4. Dispositif selon la revendication 3, **caractérisé en ce que** les moyens élastiques (23) sont agencés pour être relâchés dans la première position d'engagement de la surface abrasive (29).

5. Dispositif selon la revendication 1, **caractérisé en ce que** l'outil d'usinage (10) et le porte outil (3) sont agencés pour que le mouvement axial se fasse entre une première position où la lame (9) de coupe est en saillie par rapport à la surface abrasive (29), et une deuxième position où la surface abrasive (29) est tangente et/ou dépasse la lame (9) de coupe.

6. Dispositif selon la revendication 5, **caractérisé en ce que** les moyens élastiques (23) sont agencés pour être relâchés dans la première position en saillie de la lame.

7. Dispositif selon l'une quelconque des revendications précédentes, **caractérisé en ce que** la surface abrasive (29) est tronconique.

8. Dispositif selon l'une quelconque des revendications précédentes, **caractérisé en ce que** les moyens élastiques (23) comprennent au moins un ressort hélicoïdal (24).

9. Dispositif selon l'une quelconque des revendications 1 à 7, **caractérisé en ce que** les moyens élastiques (23) sont formés au moins en partie de matière compressible.

10. Dispositif selon l'une quelconque des revendications précédentes, **caractérisé en ce que** le porte outil (3) comporte au moins un évidement (30) de dégagement des copeaux situé au niveau de la lame (9) de coupe.

11. Dispositif selon l'une quelconque des revendications précédentes, **caractérisé en ce que** le porte outil (3) est muni d'une portion (16) présentant une surface de butée de la surface abrasive (29) de l'outil d'usinage par abrasion.

12. Dispositif selon la revendication 11, **caractérisé en ce que** la portion de butée est partiellement tronconique.

13. Dispositif selon l'une quelconque des revendications précédentes, **caractérisé en ce que** l'outil d'usinage (10) par abrasion est fixé de façon amovible sur le porte outil (3).

14. Procédé d'usinage de portée de siège (34) d'une pièce mécanique, par un dispositif comprenant un porte outil (3) mobile en rotation autour d'un axe (2) muni d'au moins une lame (9) de coupe périphérique, **caractérisé en ce qu'**on effectue la coupe de la portée de siège (34) par rotation du porte outil (3) et de la lame (9) de coupe et simultanément, ou sensiblement simultanément, on effectue l'usinage par abrasion du siège (34) par un outil d'usinage solidaire en rotation du porte outil (3), présentant une surface abrasive (29) monté de façon élastique dans le sens axial par rapport au porte outil (3) en approchant progressivement le porte outil (3) de la pièce pour mettre en contact et/ou en pression la lame et l'outil d'usinage sur ladite pièce.

15. Procédé selon la revendication 14, **caractérisé en ce que** on comprime l'outil d'usinage (10) par rapport au porte outil (3) entre une première position initiale d'engagement de la surface abrasive (29) avec la portée du siège (34), une deuxième position intermédiaire d'attaque de la lame (9) de coupe et une troisième position finale de mise en compression de la surface abrasive (29) avec la portée du siège (34) à une pression déterminée.

16. Procédé selon la revendication 15, **caractérisé en ce que** après avoir comprimé l'outil d'usinage (10) par rapport au porte outil (3) dans la position finale, on relâche la compression de l'outil d'usinage (10) jusqu'à une quatrième position, d'abrasage seul, en éloignant la lame (9) de sa position d'attaque.

17. Procédé selon la revendication 14, **caractérisé en ce que** on comprime l'outil d'usinage (10) par rapport au porte outil (3) entre une première position d'attaque de coupe avec la portée de siège (34) et une deuxième position de mise en compression de la surface abrasive (29) sur le siège à une pression déterminée.

18. Procédé selon la revendication 17, **caractérisé en ce que** on comprime encore l'outil d'usinage (10) sur le siège pour lui faire adopter une troisième position d'abrasion maximale par pression supplémentaire jusqu'à une seconde valeur de pression déterminée.

19. Procédé selon l'une quelconque des revendications 14 à 18, **caractérisé en ce qu'**on effectue l'usinage par abrasion à la même vitesse que la coupe.

## Patentansprüche

1. Vorrichtung (1) zur Bearbeitung einer Sitzfläche (34) eines mechanischen Teils, umfassend einen um eine Achse (2) mit mindestens einem umfänglichen Schneidmesser (9) drehbeweglichen Werkzeugträger (3),
**dadurch gekennzeichnet,**
**dass** sie ferner ein Schleifbearbeitungswerkzeug (10) aufweist, welches drehfest mit dem Werkzeugträger (3) verbunden ist und mindestens eine Schleiffläche (29) aufweist, wobei das Bearbeitungswerkzeug auf den Werkzeugträger (3) montiert ist und hiermit über elastische Mittel (23) fest verbunden ist, die seine axiale Bewegung gegenüber dem Werkzeugträger (3) zulassen.

2. Vorrichtung nach Anspruch 1,
**dadurch gekennzeichnet,**
**dass** das Bearbeitungswerkzeug (10) und der Werkzeugträger (3) so angeordnet sind, dass die axiale Bewegung zwischen einer ersten Position, in der das Schneidmesser (9) relativ zur Schleiffläche (29) zurückgezogen ist, und einer zweiten Position, in der das Schneidmesser (9) tangential zur Schleiffläche (29) gerichtet ist oder relativ dazu vorsteht, erfolgt.

3. Vorrichtung nach Anspruch 1 und 2,
**dadurch gekennzeichnet,**
**dass** das Bearbeitungswerkzeug (10) und der Werkzeugträger so angeordnet sind, dass die axiale Bewegung zwischen einer ersten Position, in der die Schleiffläche (29) mit dem Teil in Eingriff ist, einer Zwischenposition des Angriffs durch das Schneidmesser (9) und einer Endposition erfolgt, in der die Schleiffläche (29) und die Sitzfläche (34) zusammengepresst werden.

4. Vorrichtung nach Anspruch 3,
**dadurch gekennzeichnet,**
**dass** das die elastischen Mittel (23) so angeordnet sind, dass sie sich in der ersten Position des Eingriffs der Schleiffläche (29) entspannen.

5. Vorrichtung nach Anspruch 1,
**dadurch gekennzeichnet,**
**dass** das Bearbeitungswerkzeug (10) und der Werkzeugträger (3) so angeordnet sind, dass die axiale Bewegung zwischen einer ersten Position, in der das Schneidmesser (9) relativ zur Schleiffläche (29) vorsteht, und einer zweiten Position, in der die Schleiffläche (29) tangential zum Schneidmesser (9) gerichtet ist oder das Schneidmesser (9) überragt.

6. Vorrichtung nach Anspruch 5,
**dadurch gekennzeichnet,**
**dass** das die elastischen Mittel (23) so angeordnet sind, dass sie sich in der ersten vorstehenden Position des Schneidmessers entspannen.

7. Vorrichtung nach einem der vorhergehenden Ansprüche,
**dadurch gekennzeichnet,**
**dass** die Schleiffläche (29) kegelstumpfförmig ist.

8. Vorrichtung nach einem der vorhergehenden Ansprüche,
**dadurch gekennzeichnet,**
**dass** die elastischen Mittel (23) mindestens eine Spiralfeder (24) umfassen.

9. Vorrichtung nach einem der Ansprüche 1 bis 7,
**dadurch gekennzeichnet,**
**dass** die elastischen Mittel (23) mindestens teilweise zusammendrückbar ausgebildet sind.

10. Vorrichtung nach einem der vorhergehenden Ansprüche,
**dadurch gekennzeichnet,**
**dass** der Werkzeugträger (3) mindestens eine Ausnehmung (30) zum Abheben der Späne aufweist, welche an dem Schneidmesser (9) angeordnet ist.

11. Vorrichtung nach einem der vorhergehenden Ansprüche,
**dadurch gekennzeichnet,**
**dass** der Werkzeugträger (3) mit einem Abschnitt (16) mit einer Anschlagsfläche der Schleiffläche (29) des Schleifbearbeitungswerkzeugs versehen ist.

12. Vorrichtung nach Anspruch 11,
**dadurch gekennzeichnet,**
**dass** der als Anschlag dienende Abschnitt teilweise kegelstumpfförmig ist.

13. Vorrichtung nach einem der vorhergehenden Ansprüche,
**dadurch gekennzeichnet,**
**dass** das Schleifbearbeitungswerkzeug (10) abnehmbar am Werkzeugträger (3) befestigt ist.

14. Verfahren zur Bearbeitung der Sitzfläche (34) eines mechanischen Teils durch eine Vorrichtung, die einen um eine Achse (2) mit mindestens einem umfänglichen Schneidmesser (9) drehbeweglichen Werkzeugträger (3) aufweist,
**dadurch gekennzeichnet,**
**dass** das Schneiden der Sitzfläche (34) durch Drehung des Werkzeugträgers (3) und des Schneidmessers (9) erfolgt und gleichzeitig oder im Wesentlichen gleichzeitig die Schleifbearbeitung des Sitzes (34) durch ein Bearbeitungswerkzeug erfolgt, das drehfest mit dem Werkzeugträger (3) verbunden ist, eine Schleiffläche (29) aufweist und relativ zum Werkzeugträger (3) axial elastisch montiert ist, indem der Werkzeugträger (3) dem Teil schrittweise genähert wird, um das Schneidmesser und das Bearbeitungswerkzeug mit dem Teil in Kontakt zu bringen und/oder dagegen zu drücken.

15. Verfahren nach Anspruch 14,
**dadurch gekennzeichnet,**
**dass** das Bearbeitungswerkzeug (10) relativ zum Werkzeugträger (3) gepresst wird zwischen einer ersten Position, in der die Schleiffläche (29) mit der Sitzfläche (34) in Eingriff ist, einer zweiten Zwischenposition des Angriffs des Schneidmessers (9) und einer dritten Endposition, in welcher die Schleiffläche (29) mit der Sitzfläche (34) mit einem bestimmten Druck zusammengedrückt wird.

16. Verfahren nach Anspruch 15,
**dadurch gekennzeichnet,**
**dass** nach dem Pressen des Bearbeitungswerkzeugs (10) relativ zum Werkzeugträger (3) in der Endposition der Druck gegen das Bearbeitungswerkzeug (10) bis zu einer vierten Position nachlässt, in der lediglich das Schleifen erfolgt, indem das Schneidmesser (9) von seiner Angriffsposition entfernt wird.

17. Verfahren nach Anspruch 14,
**dadurch gekennzeichnet,**
**dass** das Bearbeitungswerkzeug (10) relativ zum Werkzeugträger (3) gepresst wird zwischen einer ersten Angriffsposition des Schneidmessers zur Sitzfläche (34) und einer zweiten Position, in der die Schleiffläche (29) gegen den Sitz mit einem bestimmten Druck gepresst wird.

18. Verfahren nach Anspruch 17,
**dadurch gekennzeichnet,**
**dass** das Bearbeitungswerkzeug (10) ferner gegen den Sitz gepresst wird, bis es eine dritte maximale Schleifposition durch zusätzliches Drücken bis zu einem zweiten bestimmten Druckwert einnimmt.

19. Verfahren nach einem der Ansprüche 14 bis 18,
**dadurch gekennzeichnet,**
**dass** die Schleifbearbeitung mit derselben Geschwindigkeit wie das Schneiden erfolgt.

## Claims

1. Device (1) for machining the face of a seat (34) of a mechanical part, comprising a tool carrier (3) mobile in rotation about an axis (2) provided with at least one peripheral cutting blade (9), **characterised in that** it also comprises an abrasive machining tool (10) locked in rotation with the tool carrier (3), exhibiting at least one abrasive surface (29), said machining tool being mounted on the tool carrier (3) and locked through the intermediary of elastic means (23) allowing its relative axial movement in relation to the tool carrier (3).

2. Device according to claim 1, **characterised in that** the machining tool (10) and the tool carrier (3) are arranged so that the axial movement takes place between a first position in which the cutting blade (9) is in a retracted position in relation to the abrasive surface (29) and a second position in which the cutting blade (9) is tangent and/or projecting in relation to said abrasive surface (29).

3. Device according to one of claims 1 and 2, **characterised in that** the machining tool (10) and the tool carrier are arranged so that the axial movement takes place between an initial position of engagement of the abrasive surface (29) with the part, an intermediate position of attack by the cutting blade (9) and a final position of compression of the abrasive surface (29) with the face of the seat (34).

4. Device according to claim 3, **characterised in that** the elastic means (23) are arranged so as to be released in the first position of engagement of the abrasive surface (29).

5. Device according to claim 1, **characterised in that** the machining tool (10) and the tool carrier (3) are arranged so that the axial movement takes place between a first position in which the cutting blade (9) is projecting in relation to the abrasive surface (29), and a second position in which the abrasive surface (29) is tangent and/or stands proud of the cutting blade (9).

6. Device according to claim 5, **characterised in that** the elastic means (23) are arranged so as to be released in the first projecting position of the blade.

7. Device according to any one of the preceding claims, **characterised in that** the abrasive surface (29) is the shape of a truncated cone.

8. Device according to any one of the preceding claims, **characterised in that** the elastic means (23) comprise at least one helical spring (24).

9. Device according to any one of claims 1 to 7, **characterised in that** the elastic means (23) are formed at least in part of compressible material.

10. Device according to any one of the preceding claims, **characterised in that** the tool carrier (3) comprises at least one opening (30) for removal of the chips located level with the cutting blade (9).

11. Device according to any one of the preceding claims, **characterised in that** the tool carrier (3) is provided with a portion (16) exhibiting a stop surface for the abrasive surface (29) of the abrasive machining tool.

12. Device according to claim 11, **characterised in that** the stop surface is partially the shape of a truncated cone.

13. Device according to any one of the preceding claims, **characterised in that** the abrasive machining tool (10) is fixed detachably on the tool carrier (3).

14. Method of machining the face of a seat (34) of a mechanical part, by a device comprising a tool carrier (3) mobile in rotation about an axis (2) provided with at least one peripheral cutting blade (9), **characterised in that** the cutting of the face of the seat (34) is effected by rotation of the tool carrier (3) and of the cutting blade (9) and simultaneously, or substantially simultaneously, the abrasive machining of the seat (34) is effected by a machining tool locked in rotation with the tool carrier (3), exhibiting an abrasive surface (29) mounted so as to be elastic in the axial direction in relation to the tool carrier (3) as the tool carrier (3) is progressively advanced towards the part so as to bring the blade and the machining tool in contact and/or under pressure on said part.

15. Method according to claim 14, **characterised in that** the machining tool (10) is compressed in relation to the tool carrier (3) between a first initial position of engagement of the abrasive surface (29) with the face of the seat (34), a second intermediate position of attack of the cutting blade (9) and a third final position of compression of the abrasive surface (29) with the face of the seat (34) at a predetermined pressure.

16. Method according to claim 15, **characterised in that** after having compressed the machining tool (10) in relation to the tool carrier (3) in the final position, the compression of the machining tool (10) is released as far as a fourth position, of abrasion on its own, by moving the blade (9) away from its position of attack.

17. Method according to claim 14, **characterised in that** the machining tool (10) is compressed in relation to the tool carrier (3) between a first position of attack for cutting with the surface of the seat (34) and a second position of compression of the abrasive surface (29) on the seat at a predetermined pressure.

18. Method according to claim 17, **characterised in that** the machining tool (10) is compressed further on the seat so as to make it adopt a third position of maximum abrasion through additional pressure up to a second predetermined pressure value.

19. Method according to any one of claims 14 to 18, **characterised in that** the abrasive machining is effected at the same speed as the cutting.
